# EUROPEAN PATENT APPLICATION

(11) **EP 2 811 367 A1**
(43) Date of publication of application: **10.12.2014**
(21) Application number: 13170348.0
(22) Date of filing: 04.06.2013
(51) Int. Cl.: G06F 1/26, G06F 1/32

(54) **A method for controlling powering of a mobile platform**

(71) Applicant: Ericsson Modems SA, 1218 Le Grand-Saconnex (CH)
(72) Inventor: Varkki, Olli, 901 00 Oulu (FI); Eksymä, Harri, 90520 Oulu (FI); Pessa, Marko, 90540 Oulu (FI)
(74) Representative: Valea AB

(57) **Abstract**

A method for controlling powering of a mobile platform is provided. The platform comprises at least two Power Management Units PMUs. The method comprises synchronizing of the at least two Power Management Units PMUs, whereby a selected start up time will remain constant. Further, a mobile platform comprising at least two Power Management Units PMUs for controlling power in the mobile platform is provided. The platform comprises means for synchronizing of the said at least two Power Management Units PMUs, whereby a selected start up time will remain constant.

## Description

### TECHNICAL FIELD

Embodiments herein relate to methods for controlling powering of a mobile platform comprising at least two Power Management Units (PMUs). The method comprises synchronizing of the at least two Power Management Units (PMUs), whereby a selected start up time will remain constant.

### BACKGROUND

Modern mobile platforms have constantly increasing power demands. Platforms will require more power supplies, i.e. regulators, to supply different functions in the platform. Granularity in power supply usage is required to optimize efficiency, as load currents may be high. Thus supply voltage should preferably be optimised in order to avoid any efficiency loss. Eventually, more and more regulators are required to achieve good battery life time for future mobile electronic products. Often regulators are Switched Mode Power Supplies (SMPS) which achieves good efficiency. If all power supplies in a platform are concentrated to a single Integrated Circuit (IC), location of the SMPS on the Printed Circuit Board (PCB) might be non-optimum versus the load location. Further, thermal heating might become too excessive for one IC to sustain. Thus adding more and more regulator ICs is a solution. However, with many regulator ICs it becomes more complex to control all the regulators, especially taking into account that regulators are typically controlled and enabled during boot up sequence when platform Soft Ware (SW) is not yet in charge of the regulator control. Further, it is important that regulators are enabled and disabled in certain specific orders. Start-up order is important in order to guarantee platform functionality but also to avoid all SMPS to activate simultaneously with excessive momentary battery currents as a result.

Even if two similar regulator ICs would be enabled exactly at the same time point, they could enable their regulators at different times because the time base in each regulator IC varies, as typically, due to cost reasons, low precision oscillators are used to take care of the time base. In a platform this could lead to a misaligned rank sequence and cause malfunctioning of the platform.

In case a plurality of ICs is present, one of the circuits is normally defined to be a master circuit, while the other circuits are defined to be slave circuits. The master circuit controls the power-up and down of the entire system. This may be realized with an enable signal which is controlled by the master circuit and which can be detected by the slave circuits. Whenever the enable signal becomes active, the slave circuits cause the associated functional components to be powered up, and whenever the enable signal becomes inactive, the slave circuits cause the associated functional components to be powered down.

US 7395440 B2 relates to an electronic device comprising at least two power management circuits and a signal line connecting the circuits. Each of the circuits is adapted to control a power supply to at least one functional component of the electronic device. Each of the circuits is adapted to detect a condition which requires powering down functional components of said electronic device and to set the signal line to a predetermined state, in case the circuit detects a condition which requires a powering down of the electronic device. Further, each of the circuits is adapted to monitor a state of the signal line and to power down all functional components associated to it upon detection of the predetermined state of the signal line.

### SUMMARY

An object of embodiments herein is to provide an improved method for controlling powering of a mobile platform.

According to some embodiments described herein, a method for controlling powering of a mobile platform comprising at least a first Finite State Machine (FSM), and a second Finite State Machine (FSM) is provided. The method comprises synchronizing of the first Finite State Machine (FSM) with the second Finite State Machine (FSM) comprised in the mobile platform. Thereby, robust start-up and start-down is provided for the mobile platform. Further, battery currents are kept at a reasonable level.

According to some embodiments described herein, the mobile platform comprises at least a first Power Management Unit (PMU) and a second Power Management Unit (PMU). The method further comprises synchronizing of the first Power Management Unit (PMU) with the second Power Management Unit (PMU), whereby a selected start up time will remain constant.

According to some embodiments described herein, the mobile platform comprises at least a first Integrated Circuit (IC) and a second Integrated Circuit (IC). The method further comprises synchronizing of the first Integrated Circuit (IC) with the second Integrated Circuit (IC).

According to some embodiments described herein, the first Integrated Circuit (IC) is acting as a master circuit, and the second Integrated Circuit (IC) is acting as a slave circuit. The method further comprises controlling of the slave circuit performed by the master circuit.

According to some embodiments described herein, the mobile platform comprises one or more further Integrated Circuits (ICs) acting as a slave circuits. The method further comprises controlling of the further Integrated Circuits (ICs) acting as slave circuits performed by the Integrated Circuits (ICs) acting as master circuit.

According to some embodiments described herein, the method further comprises synchronizing at least two Finite State Machines (FSMs) in the mobile platform belonging to different Integrated Circuits (ICs) by means of exchange of information from a master Integrated Circuit (IC) with at least one slave Integrated Circuit (IC).

According to some embodiments described herein, the method further comprises receiving a first signal to the Integrated Circuit (IC) acting as master, changing state of the Finite State Machine (FSM) "PowerOff" towards "PowerOn", reaching of the end of the "References" -state by the Integrated Circuit (IC) acting as master, reaching of the end of the "References" -state by the Integrated Circuit (IC) acting as slave, communicating reach of the end of the "References" - state by the Integrated Circuit (IC) acting as slave to the Integrated Circuit (IC) acting as master, starting up progressing with rank-up by the Integrated Circuit acting as master.

According to some embodiments described herein, a mobile platform comprising a first Finite State Machine (FSM), a second Finite State Machine (FSM), and a synchronization unit is provided. The synchronization unit is configured to synchronize the first Finite State Machines (FSM) with the second Finite State Machines (FSMs) comprised in the mobile platform.

According to some embodiments described herein, the mobile platform further comprises at least a first Integrated Circuit (IC) and a second Integrated Circuit (IC). The synchronization unit is configured to synchronize the first Integrated Circuit (IC) with the second Integrated Circuit (IC).

According to some embodiments described herein, the first Integrated Circuit (IC) is acting as a master circuit, and the second Integrated Circuit (IC) is acting as a slave circuit. The mobile platform further comprises a controller configured to control the slave circuit by the master circuit.

According to some embodiments described herein, the mobile platform further comprises one or more further Integrated Circuits (IC) acting as a slave circuit. The controller is configured to control the further one or more Integrated Circuits (IC) acting as slave circuits by the Integrated Circuit (IC) acting as master circuit.

According to some embodiments described herein, the synchronization unit is configured to synchronize at least two Finite State Machines (FSMs) in the mobile platform belonging to different Integrated Circuits (ICs) by means of exchange of information from a master Integrated Circuit (IC) with at least one slave Integrated Circuit (IC).

According to some embodiments described herein, the platform further comprises a receiver for receiving a first signal to the Integrated Circuit (IC) acting as master, a detector detecting change of state of the Finite State Machine (FSM) "PowerOff" towards "PowerOn", a detector detecting reach of the end of the "References" -state by the Integrated Circuit (IC) acting as master, a detector detecting reach of the end of the "References" -state by the Integrated Circuit (IC) acting as slave, a communicator communicating reach of the end of the "References" - state by the Integrated Circuit (IC) acting as slave to the Integrated Circuit (IC) acting as master, thereby starting up progressing with rank-up by the Integrated Circuit acting as master.

### BRIEF DESCRIPTION OF THE DRAWINGS

Examples of embodiments herein are described in more detail with reference to attached drawings in which:
Figure 1 shows a flow chart of an exemplified method.
Figure 2 shows the Finite State Machine (FSM) of the Power Management Units (PMUs).
Figure 3 shows means used for synchronization in embodiments disclosed herein.
Figure 4 shows a nominal use case in accordance with embodiments disclosed herein.
Figure 5 shows an exemplified mobile platform.

### DETAILED DESCRIPTION

Embodiments herein will be exemplified in the following detailed non-limiting description. The present application relates to Power Management Units (PMU) and Integrated Circuits (IC).

The technical field of the present application further relates to a method to get more than one power management IC to power up and down in a controllable manner so that each regulator starts at the correct time slot.

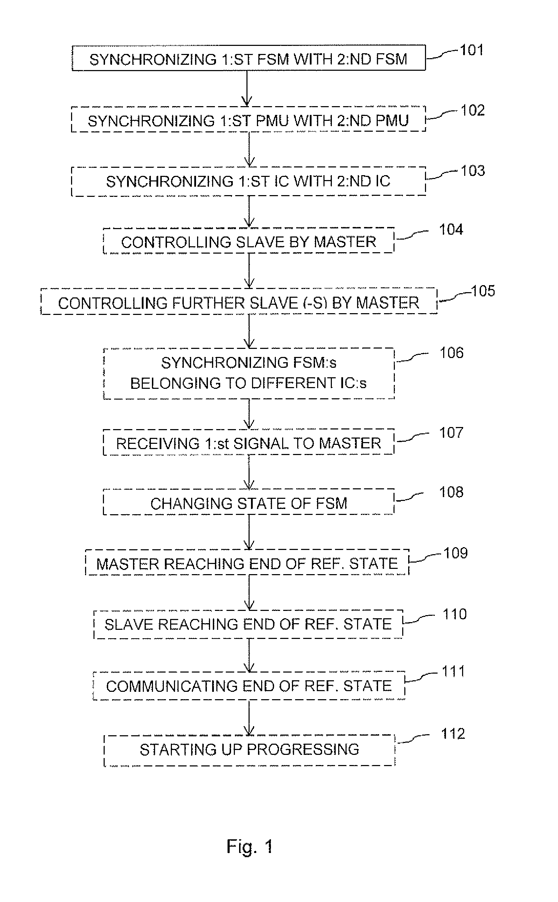

Methods disclosed herein relates to how to get more than one power management IC to power up and down in a controllable manner so that each regulator starts at correct time slot, no matter at which IC the regulator is located at. This is achieved by a method for controlling powering of a mobile platform as shown in **Figure 1**. The mobile platform comprises at least a first Finite State Machine FSM and a second Finite State Machine FSM.

### Action 101

The method comprises in a first action 101 synchronizing of the first Finite State Machines FSM with the second Finite State Machines FSM comprised in the mobile platform. Thus, synchronizing of the Finite State Machines (FSMs) at different ICs. The selected start up time slot, rank order, will remain constant and the desired one, and allows the platform to start up in safe manner. By synchronizing the FSMs, various different interfaces and means could be provided for the actual synchronization. Examples are described below in order to illustrate the idea of embodiments shown. The interface used for the synchronization is not the main point. In the example two similar power management ICs, or Power Management Units (PMU), are synchronized. The Master IC is the IC that controls the other IC called slave. The mobile platform may thus comprise at least a first Power Management Unit PMU and a second Power Management Unit PMU.

### Action 102

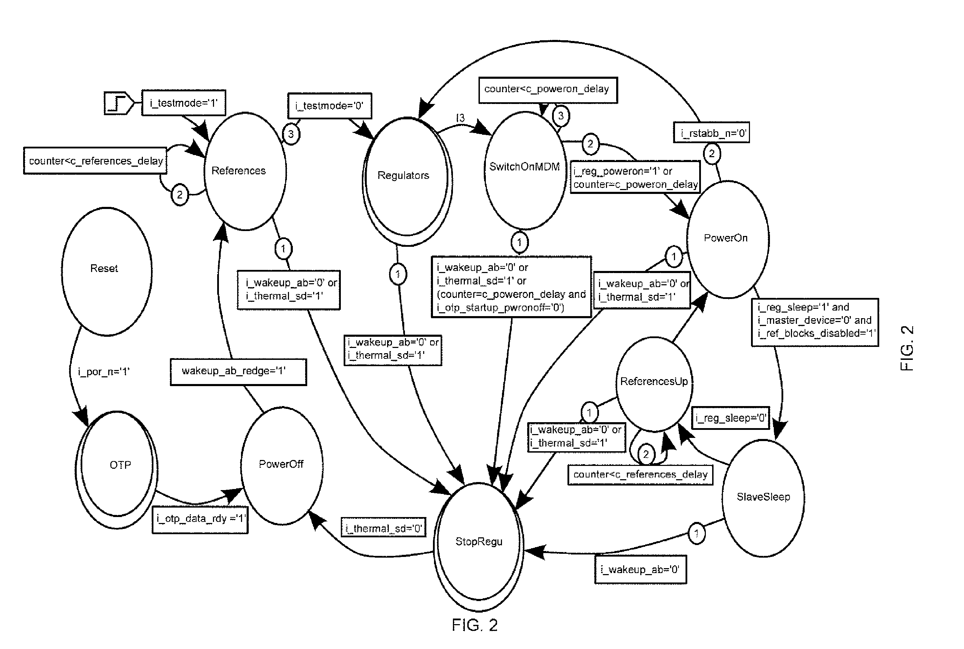

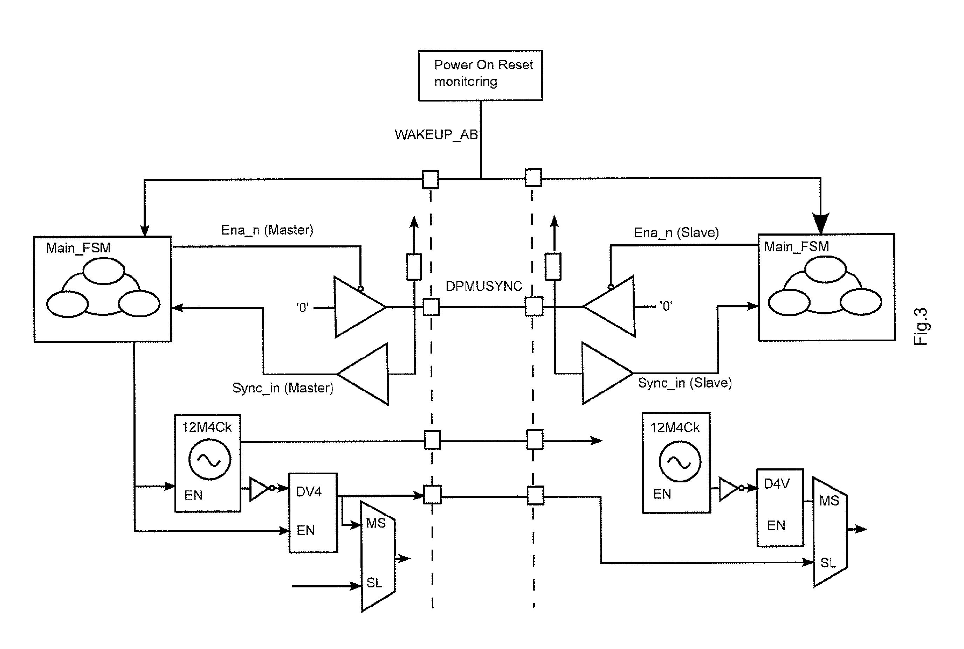

The method may comprise in action 102 synchronizing of the first Power Management Unit PMU with the second Power Management Unit PMU. Thereby a selected start up time will remain constant. **Figure 2** shows the FSM of the PMUs, which are identical. As can be seen FSM has many states but main states for regulator rank-up and rank-down are the "Regulators" -state and "StopRegu" -states. Synchronization ensures that rank-up -state starts simultaneously in both PMUs, i.e. "Regulators" -state is initiated at the same time. Similarly all states that somehow control regulators should start simultaneously. **Figure 3** shows the means used for the synchronization. Both PMUs has a ball called DPMUSYNC used for a two way communication between the master and the slave, providing information of the various phases of the FSM.

### Action 103

In other exemplified embodiments herein the mobile platform may comprise at least a first Integrated Circuit IC and a second Integrated Circuit IC. The method may then comprise, in a further action 103, synchronizing of the first Integrated Circuit IC with the second Integrated Circuit IC. The first Integrated Circuit IC may act as a master circuit, and the second Integrated Circuits IC may act as a slave circuit.

### Action 104

The method may further comprise, in action 104, controlling of the slave circuit performed by the master circuit. The mobile platform may further comprise one or more further Integrated Circuits IC acting as a slave circuit.

### Action 105

Then, the exemplified method may further comprise, in action 105, controlling of the further one or more Integrated Circuits IC acting as slave circuits performed by the Integrated Circuit IC acting as master circuit.

### Action 106

The method may further comprise, in action 106, synchronizing at least two Finite State Machines FSMs in the mobile platform belonging to different Integrated Circuits ICs by means of exchange of information from a master Integrated Circuit IC associated with at least one slave Integrated Circuit IC.

### Actions 107-112

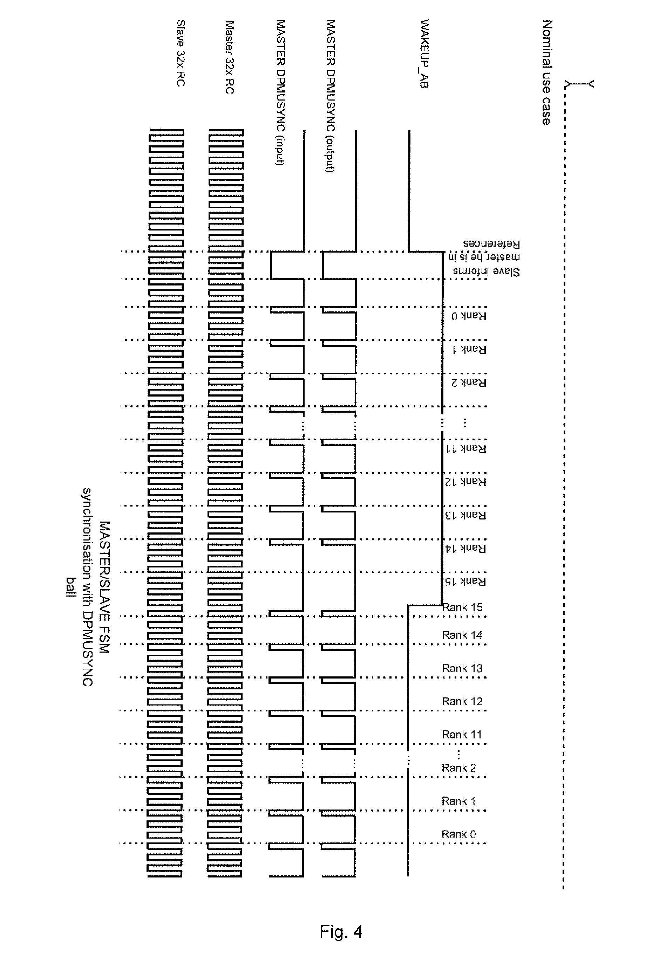

**Figure 4** shows a nominal use case. The method may further comprise, in action 107, receiving a first signal to any Integrated Circuit IC acting as master, and, in action 108, changing state of the Finite State Machine FSM "PowerOff" towards "PowerOn". Both PMUs receive WAKEUP_AB -signal which makes the FSM to progress from "PowerOff" -state towards "PowerOn" -state. Now, the master waits at the end of the "References" -state so that also the slave will reach the end of the "References" -state. In action 109, the end of the "References" -state is reached by the Integrated Circuit IC acting as master and, in action 110, the end of the "References" -state is reached by any Integrated Circuit IC acting as slave. In action 111, reach of the end of the "References" - state by any Integrated Circuit IC acting as slave is communicated to the Integrated Circuit IC acting as master. Thus, the Slave communicates that the end of the "References" - state is reached by pulling the DPMUSYNC signal low for a short period. In action 112, starting up progressing with rank-up is performed by the Integrated Circuit acting as master. Thus, after the slave has acknowledged it has reached the "References" -state, the master starts progressing with rank-up. The master provides information about each rank step, 16 rank steps in this example, by providing a low state pulse at the DPMUSYNC -signal. In this way, the slave receives information of the rank state and can enable it's regulators at specific ranks, and the ranks stay aligned.

The total rank sequence is so long in time that if both PMUs would rely on their inaccurate oscillators the final ranks states could happen at very different time points between master and slave. Thus regulators could start at wrong order. It is possible to align rank-up and rank-down of regulators located at different ICs to have a robust platform start-up and start-down. Also battery currents are kept at reasonable level when regulators are enabled in good sequence. Further, it is possible to distribute regulators at optimum locations at the platform PCB to better serve load and still keeping the good control over the rank sequences, while SW is not yet in charge of the regulator control.

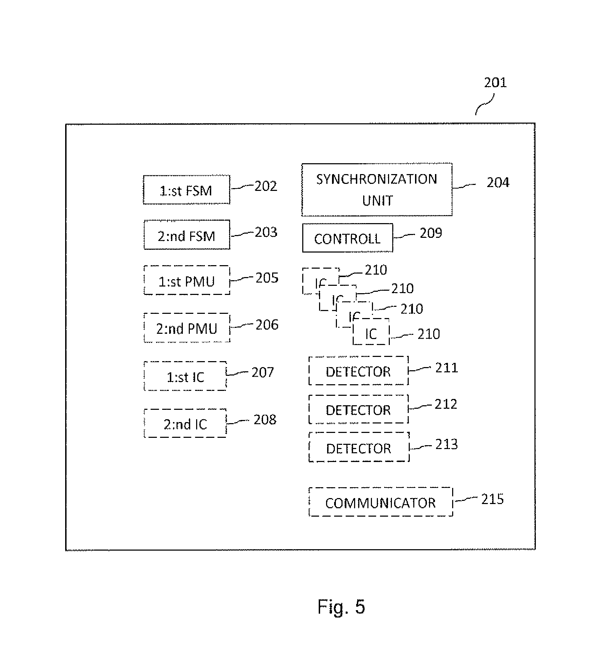

To perform the methods steps for controlling powering of a mobile platform, a mobile platform 201 comprising an arrangement depicted in **Figure 5** is presented. The mobile platform comprises a first Finite State Machine FSM 202, a second Finite State Machine FSM 203, and a synchronization unit 204 configured to synchronize the first Finite State Machines FSM 201 with the second Finite State Machines FSM 202. The mobile platform 201 may further comprise at least a first Power Management Unit PMU 205 and a second Power Management Unit PMU 206. The synchronization unit 204 may be configured to synchronize the first Power Management Unit PMU 205 with the second Power Management Unit PMU 206, whereby a selected start up time will remain constant. The mobile platform may further comprise at least a first Integrated Circuit IC 207 and a second Integrated Circuit IC 208. The synchronization unit 204 is configured to synchronize the first Integrated Circuit IC 207 with the second Integrated Circuit IC 208. The first Integrated Circuit IC 207 may act as a master circuit, and the second Integrated Circuit IC 208 may act as a slave circuit. The platform may further comprise a controller 209 configured to control the slave circuit by the master circuit.

In some embodiments, the mobile platform 201 may further comprise one or more further Integrated Circuits IC 210 acting as a slave circuit. The controller 209 is configured to control the further one or more Integrated Circuits IC 210 acting as slave circuits by the Integrated Circuit IC 207 acting as master circuit. The synchronization unit may be configured to synchronize at least two Finite State Machines FSMs in the mobile platform 201 belonging to different Integrated Circuits ICs by means of exchange of information from a master Integrated Circuit IC with at least one slave Integrated Circuit IC. In still other embodiments, the platform may further comprise a receiver 211 for receiving a first signal to the Integrated Circuit IC acting as master, a detector 212 detecting change of state of the Finite State Machine FSM "PowerOff" towards "PowerOn", a detector 213 detecting reach of the end of the "References" -state by the Integrated Circuit IC acting as master, a detector 214 detecting reach of the end of the "References" -state by the Integrated Circuit IC acting as slave, a communicator 215 communicating reach of the end of the "References" - state by the Integrated Circuit IC acting as slave to the Integrated Circuit IC acting as master, starting up progressing with rank-up by the Integrated Circuit acting as master.

When using the word "comprise" or "comprising" it shall be interpreted as non-limiting, in the meaning of consist at least of. When using the word action/actions it shall be interpreted broadly and not to imply that the actions have to be carried out in the order mentioned. Instead, the actions may be carried out in any suitable order other than the order mentioned. Further, some action/actions may be optional. The embodiments herein are not limited to the above described examples. Various alternatives, modifications and equivalents may be used. Therefore, this disclosure should not be limited to the specific form set forth herein. This disclosure is limited only by the appended claims and other embodiments than the mentioned above are equally possible within the scope of the claims.

## Claims

1. A method for controlling powering of a mobile platform (201) comprising at least a first Finite State Machine FSM (202), and a second Finite State Machine FSM (203), the method comprising:
- *synchronizing* (201) of the first Finite State Machine FSM with the second Finite State Machine FSM comprised in the mobile platform.

2. A method according to claim 1, wherein the mobile platform comprises at least a first Power Management Unit PMU (205) and a second Power Management Unit PMU (206), the method further comprising:
- *synchronizing* (102) of the first Power Management Unit PMU with the second Power Management Unit PMU, whereby a selected start up time will remain constant.

3. A method according to claim 1 or 2, wherein the mobile platform (201) comprises at least a first Integrated Circuit IC (207) and a second Integrated Circuit IC (208), the method further comprising:
- *synchronizing* (103) of the first Integrated Circuit IC with the second Integrated Circuit IC.

4. A method according to claim 3, wherein the first Integrated Circuits IC (207) is acting as a master circuit, and wherein the second Integrated Circuits IC (208) is acting as a slave circuit, the method further comprising:
- *controlling* (104) the slave circuit is performed by the master circuit.

5. A method according to claim 4, wherein the mobile platform (201) comprises one or more further Integrated Circuits IC (210) acting as a slave circuit, the method further comprising:
- *controlling* (105) the further one or more Integrated Circuits IC (210) acting as slave circuits is performed by the Integrated Circuit IC (207) acting as master circuit.

6. A method according to any of claims 3-5, the method further comprising:
- *synchronizing* (106) at least two Finite State Machines FSMs in the mobile platform belonging to different Integrated Circuits ICs by means of exchange of information from a master Integrated Circuit IC associated with at least one slave Integrated Circuit IC.

7. A method according to any of claims 3-6, the method further comprising:
- *receiving* (107) a first signal to any Integrated Circuit IC acting as master,
- *changing* (108) state of the Finite State Machine FSM "PowerOff" towards "PowerOn",
- *reaching* (109) of the end of a "References" -state by the Integrated Circuit IC acting as master,
- *reaching* (110) of the end of a "References" -state by any Integrated Circuit IC acting as slave,
- *communicating* (111) reach of the end of the "References" - state any Integrated Circuit IC acting as slave to the Integrated Circuit IC acting as master,
- *starting up* (112) progressing with rank-up by the Integrated Circuit acting as master.

8. A mobile platform (201) comprising: a first Finite State Machine FSM (202), a second Finite State Machine FSM (203), and a synchronization unit (204) configured to synchronize the first Finite State Machines FSM (202) with the second Finite State Machines FSM (203) comprised in the mobile platform (201).

9. A mobile platform (201) according to claim 8, further comprising at least a first Power Management Unit PMU (205) and a second Power Management Unit PMU (206), wherein the synchronization unit (204) is further configured to synchronize the first Power Management Unit PMU (205) with the second Power Management Unit PMU (206), whereby a selected start up time will remain constant.

10. A mobile platform (201) according to claim 8 or 9, further comprising at least a first Integrated Circuit IC (207) and a second Integrated Circuit IC (208), wherein the synchronization unit (204) is configured to synchronize the first Integrated Circuit IC (207) with the second Integrated Circuit IC (208).

11. A mobile platform (201) according to claim 10, wherein the first Integrated Circuit IC (207) is acting as a master circuit, and wherein the second Integrated Circuit IC (208) is acting as a slave circuit, the mobile platform (201) further comprising a controller (209) configured to control the slave circuit by the master circuit.

12. A mobile platform (201) according to claim 10 or 11, further comprising one or more further Integrated Circuits IC (210) acting as a slave circuit, wherein the controller (209) is configured to control the further one or more Integrated Circuits IC (210) acting as slave circuits by the Integrated Circuit IC (207) acting as master circuit.

13. A mobile platform (201) according to claim 10, 11 or 12, wherein the synchronization unit (204) is configured to synchronize at least two Finite State Machines FSMs in the mobile platform belonging to different Integrated Circuits ICs by means of exchange of information from a master Integrated Circuit IC with at least one slave Integrated Circuit IC.

14. A mobile platform (201) according to any of claims 8-12, the mobile platform (201) further comprising
a receiver (211) for receiving a first signal to the Integrated Circuit IC acting as master,
a detector (212) detecting change of state of the Finite State Machine FSM "PowerOff" towards "PowerOn",
a detector (213) detecting reach of the end of the "References" -state by the Integrated Circuit IC acting as master,
a detector (214) detecting reach of the end of the "References" -state by the Integrated Circuit IC acting as slave,
a communicator (215) communicating reach of the end of the "References" - state by the Integrated Circuit IC acting as slave to the Integrated Circuit IC acting as master,
starting up progressing with rank-up by the Integrated Circuit acting as master.
